# EUROPEAN PATENT SPECIFICATION

(11) **EP 0 267 749 B1**
(45) Date of publication and mention of the grant of the patent: **26.01.1994**
(21) Application number: 87309834.7
(22) Date of filing: 06.11.1987
(51) Int. Cl.: G11B 5/48

(54) **Magnetic head supporting apparatus**
Montage von magnetischen Köpfen
Support de tête magnétique

(30) Priority: 12.11.1986 JP 268956/86; 12.11.1986 JP 268954/86; 13.11.1986 JP 270754/86; 13.11.1986 JP 270753/86; 25.11.1986 JP 280313/86; 25.11.1986 JP 280312/86; 13.07.1987 JP 174218/87
(43) Date of publication of application: 18.05.1988
(73) Proprietor: SEIKO EPSON CORPORATION, Shinjuku-ku Tokyo-to (JP)
(72) Inventor: Kimura, Ippo, Suwa-shi Nagano-ken (JP); Okumura, Naoyuki, Suwa-shi Nagano-ken (JP); Aruga, Tomoe, Suwa-shi Nagano-ken (JP); Arai, Yoshio, Suwa-shi Nagano-ken (JP)
(74) Representative: Miller, Joseph

(56) References cited:
- EP-A- 0 186 427
- FR-A- 2 466 827
- GB-A- 2 051 457
- US-A- 3 489 381
- US-A- 3 581 298
- PATENT ABSTRACTS OF JAPAN, vol. 9, no. 257 (P-396)(1980), 15 October 1985
- PATENT ABSTRACTS OF JAPAN, vol. 8, no. 192 (P-298)(1629), 4 September 1984
- PATENT ABSTRACTS OF JAPAN, vol. 8, no. 157 (P-288)(1594), 20 July 1984

## Description

The present invention relates to a magnetic head supporting apparatus and, although the invention is not so restricted, it relates more particularly to a magnetic head supporting apparatus for use with double sided record media.

Magnetic head supporting apparatus for magnetic recording apparatus which use both sides of a flexible or floppy disk are divided into three known types.

In one type (i.e. the so-called "IBM" type), which was originally used when IBM Corporation developed the flexible disk drive, magnetic heads are carried on the leading ends of spring arms and are pressed through projections suspended by press springs so that the magnetic heads can rotate in the radial and tangential directions of a flexible disk. As the weight of a magnetic recording apparatus using a flexible disk increases, however, such a construction makes it difficult to position the magnetic heads in prescribed positions with sufficient accuracy. Such a construction, moreover, is not used in a magnetic recording apparatus using a flexible disk of 5.25 inches (13.34 cms) or less.

A supporting apparatus adopted at present in the magnetic recording apparatus using a flexible disk of 5.25 inches (13.34 cms) or less is divided into the double sided gimbal type and the Tandon type which are described as follows.

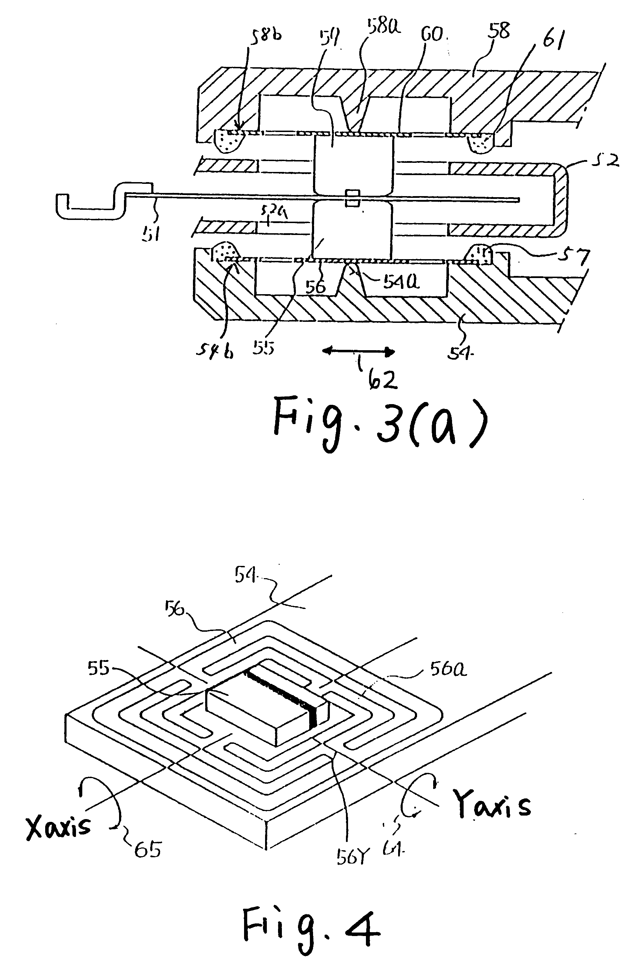

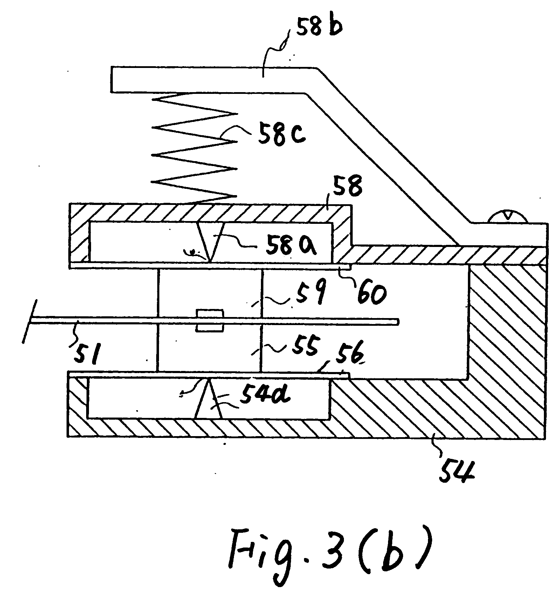

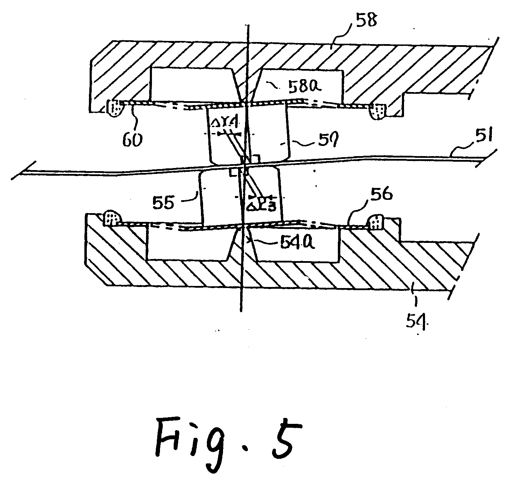

Figure 3(a) and 3(b) are sections and Figure 4 is a perspective view of main portions of a first known type of magnetic head supporting apparatus.

In this first known type of magnetic head supporting apparatus (which will be called the "double sided gimbal type"), a first magnetic head 55 and a second magnetic head 59 are mounted in a gimballed manner by means of a first supporting plate 56 and a second supporting plate 60, respectively, so as to hold a flexible disk 51 therebetween through first and second pivots 54a and 58a which are formed partially in first and second rigid carriages 54 and 58, respectively. The second carriage 58 is pressed towards the first carriage 54 by a holding plate 58b and a head pressing spring 58c.

In this first known type of magnetic head supporting apparatus, each magnetic head 55, 59 is mounted and has freedom of movement in gimballed manner in two directions (as indicated by arrows 64 and 65 in Figure 4). These freedoms of movement are determined by the torsional rigidities of the first and second supporting plates 56, 60. These torsional rigidities are made generally low at 200g mm/rad or less so as to improve the ability of the magnetic heads 55, 59 to follow the flexible disk 51.

A second known type of magnetic head supporting apparatus is disclosed in US-A-4, 151,573 (which was assigned to Tandon Corporation). In the magnetic head supporting apparatus of this type (which will be called the "Tandon type"), a first magnetic head is fixed on a first carriage whereas a second magnetic head is mounted in a gimballed manner by a holding plate on a pivot formed in a portion of a second carriage, such that the flexible disk is held between the first and second magnetic heads. Further examples of this can be found in Japanese patent publication no. 59 79463 (which is considered to be the closest prior art document) and GB patent publication no. 2051457. Like the said first known type of magnetic head supporting apparatus, the second known type of magnetic head supporting apparatus has freedom of movement in two directions, as has been described with reference to Figure 4, and this freedom of movement is determined by the respective torsional rigidities of supporting plates.

With a view to compensating for the difficulty with which the first magnetic head follows the flexible disk because the first magnetic head is fixed on the first carriage, it is necessary to improve the ease with which the second magnetic head can follow the flexible disk. As a result, the torsional rigidity of the supporting plate of the second magnetic head is generally arranged to be 150g mm/rad or less.

In the first known type of magnetic head supporting apparatus, the first magnetic head 55 and the second magnetic head 59 are carried by the first pivot 54a and the second pivot 58a respectively, as shown in Figure 3(a). If the inclination of the flexible disk 51 with respect to the horizontal (or some other datum) changes, the inclination of the first and second magnetic heads 55, 59 will also change so as to follow the flexible disk 51, with the result that there is a displacement from the prescribed recording and reproducing position, i.e. so as to produce a so-called "off-track" position which is illustrated in Figure 5.

In Figure 5, the first supporting plate 56 which is carried on the first carriage 54 and the second supporting plate 60 which is formed on the second carriage 58 are shown as being in contact with the first and second pivots 54a and 58a respectively such that they are prevented from flexing toward the respectively corresponding carriages 54 and 58 and such that they can roll on their points of contact with the first and second pivots 54a and 58a. If, for example, the flexible disk 51 moves up and down or flexes, the first and second magnetic heads 55 and 59 have their inclination stabilized, while holding the flexible disk 51 therebetween, until the flexibility of the disk 51 comes into balance with the flexibilities of the first and second supporting plates 56 and 60, as shown in Figure 5.

In order to retain the data compatibility of the magnetic recording system, the recording and reproducing position of a recording and reproducing medium is standarized and specified. As shown in Figure 5, the recording and reproducing portions of the first magnetic head 55 and the second magnetic head 59 cause displacements, or "off-tracks", of Δx₃ and Δx₄, respectively, from the original recording and reproducing positions of the disk 51. As a result, if the data are reproduced in this state, then the reproduction will either be incorrect with a smaller amplitude of the reproduced signals, or may not be possible at all.

If, on the other hand,the data are recorded in that state and are reproduced by another normal magnetic recording apparatus, the amplitude of the reproduced signals decreases so as to make correct reproduction impossible. In consequence, the reliability of the magnetic recording apparatus may be reduced substantially and there may even be the fatal defect of the magnetic recording apparatus losing its compatibility.

In the second known type of magnetic head supporting apparatus, i.e. the Tandon type, on the other hand, the above-specified "off-track" displacement will not occur. However, the ability of the equipment to follow any inclination of the flexible disk is very poor, since the first magnetic head is fixed. In order to achieve such ability as much as possible, the force (i.e. the so-called "head pressing force) for pressing the second magnetic head toward the first magnetic head has to be increased with the result that the life of the flexible disk is shortened.

In either the first known type of magnetic head supporting apparatus (i.e. the double sided gimbal type) or the second known type of magnetic head supporting apparatus (i.e. the Tandon type), moreover, the first magnetic head 55 and the second magnetic head 59 (as shown in Figure 3(a), are liable to strike against each other through the medium of the flexible disk 51 when the second magnetic head 59 moves from the unloaded state (not shown), in which it does not press the flexible disk 51, to the head loaded state (shown in Figure 3(a)) in which the second magnetic head 59 presses against the flexible disk 51. This impact will damage the magnetic film of the flexible disk 51 and may cause its separation, depending upon how serious the damage is, with the result that errors are made in the recording and reproducing operations.

In order to weaken the above-mentioned impact, there has been adopted in the prior art a method of damping the impact by attaching an oil damper to the second carriage to apply a braking force to the second carriage when in the head loaded state. This oil damper is expensive and is affected by temperature. That is to say, the viscosity of the oil in the oil damper will drop at a high temperature so as to impair the damping effect and will rise at a low temperature so to make the damper excessively effective.

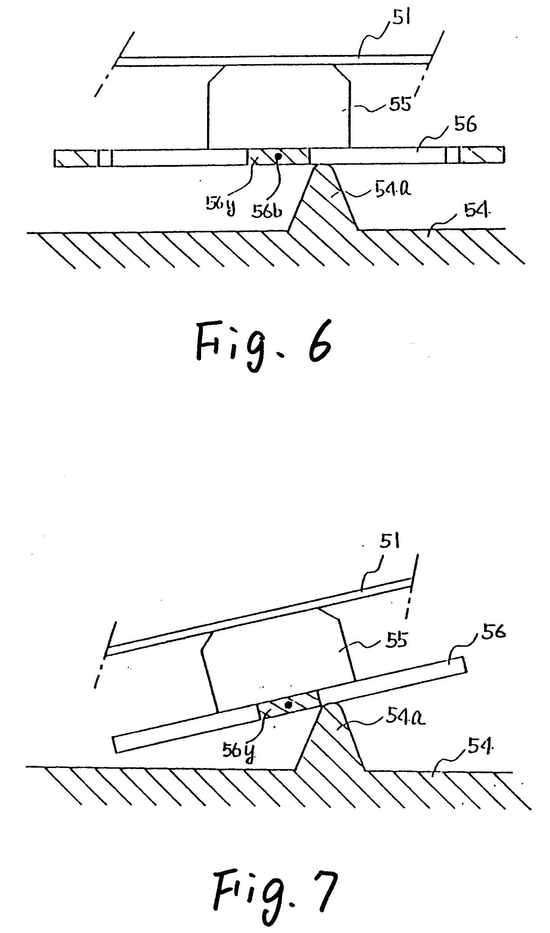

Not only the first known type of magnetic head supporting apparatus but also the second known type of magnetic head supporting apparatus requires both the first and second pivots 54a and 58a, which in turn will raise the following problems which are illustrated in Figures 6 and 7.

Figures 6 and 7 are diagrams illustrating the coactions of the pivots and the supporting plates. For simplicity of explanation, only one head is shown, but a similar explanation will of course apply to the other head.

In Figure 6, the first magnetic head 55 is shown as holding the flexible disk 51 and as being supported by the first supporting plate 56 whose flexibility is in turn regulated by the first pivot 54a formed on the first carriage 54.

Figure 7 shows the state in which the first magnetic head 55 is inclined so as to follow that of the flexible disk 51. In this case, the first magnetic head 55 will adopt an inclination so as to follow the flexible disk 51, whereas the first supporting plate 56 will have its tie bar (as indicated at 56y in Figure 4) flexing to rotate on the sectional centre 56b shown in Figure 6. Since, however, the first supporting plate 56 is regulated by the first pivot 54a, it will in fact turn on the contact point between the first pivot 54a and the first supporting plate 56 as seen from Figure 7).

By these actions, the tie bar position will be displaced, but this displacement has to be absorbed by the flexure of an arm 56a shown in Figure 4. An excessive force is required for causing such flexure.

In a construction employing the first pivot 54a, more specifically, forces are required for not only twisting the tie bar 5y but also for flexing the arm 56a if the inclination of the first magnetic head 55 changes so as to follow the flexible disk 51. This requirement makes it more difficult for the first magnetic head 55 to follow the flexible disk 51.

For the second supporting plate 60 and the second pivot 58a, the ability of the second magnetic head 59 to follow the flexible disk 51 is also worsened for the same reason.

In order to compensate for such a deterioration in the ability to follow on the other hand, the torsional rigidities of the first and second magnetic head supporting plates 56 and 60 have to be reduced. As a result, the supporting plates have to be made so thin that they are easily affected by external forces, with the result that the supporting plates are liable to be broken and deformed.

A further example of a supporting apparatus can be found in JP patent publication number 59 54069. However, this disclosure provides no solution to the above.

Thus in the double sided gimbal type the magnetic heads cannot fully follow changes in the inclination of the flexible disk, with consequent impairment of recording and reproduction, while in the Tandon type, it is necessary to use a very high head pressing force with the result that the life of the flexible disk is shortened.

According, therefore to the present invention, there is provided a magnetic head supporting apparatus comprising a flexible magnetic disk; first and second magnetic heads which are adapted to contact opposite sides of the flexible disk; first and second supporting plates for respectively supporting the first and second magnetic heads, the first and second supporting plates are resiliently yieldable such that the first and second magnetic heads can move directions generally perpendicular to the plane of the flexible disk; first and second carriages for respectively carrying the first and second supporting plates; and urging means for urging the first and second magnetic heads towards each other, characterised in that the torsional rigidities of the first and second supporting plates radially and tangentially of the flexible disk are substantially in the range of 400 g mm/rad to 3,000 g mm/rad.

The first and second supporting plates may have substantially equal rigidities.

Preferably, the spring rates of the first and second supporting plates in the said directions are substantially 50 g/mm or more.

Each supporting plate may be fixed to a mounting face of its respective carriage by means of adhesive which is disposed in a space in the respective carriage. Moreover, each mounting face may be provided with means for restricting flow of the adhesive outwardly of the said space.

A stopper means may be provided for restricting flexure of at least one of supporting plates in a direction away from the flexible disk.

At least one supporting plate protector may be provided to control floating movement of a supporting plate or plates.

The supporting plate protector may be made of a highly permeable or a highly conductive material.

The invention is illustrated, merely by way of example, in the accompanying drawings, in which:-
Figure 1 is a section showing the main portion of first embodiment of a magnetic head supporting apparatus according to the present invention;
Figure 2(a) is a top plan view showing a portion of the magnetic head supporting apparatus of the said first embodiment;
Figure 2(b) is a section which illustrates, on a larger scale, a modification of a part of the structure shown in Figure 1;
Figures 3(a) and 3(b) are sections and Figure 4 is a perspective view showing the main portions of a prior art magnetic head supporting apparatus;
Figure 5 is a diagram illustrating an "off-track" displacement in the magnetic supporting apparatus shown in Figures 3(a) and 3(b) and 4, due to the inclination of the magnetic heads thereof;
Figures 6 and 7 are diagrams illustrating the coaction between a pivot and a supporting plate of the magnetic head supporting apparatus shown in Figures 3(a), 3(b) and 4;
Figure 8 is a diagram illustrating the reproduced output of a magnetic recording apparatus;
Figures 9(a) and 9(b) are diagrams illustrating the "off-track" displacement due to the inclination of the magnetic heads in the present invention;
Figure 10 is a diagram illustrating the inclination of a magnetic head in dependence upon the position of a tie bar shown in Figure 2(a);
Figure 11 is a diagram illustrating the inclination of the magnetic heads due to the difference in rigidity between the arms of the supporting plates in the present invention;
Figure 12(a) is a diagram illustrating the pressure upon the head faces due to the rigidities of the said arms;
Figure 12(b) is a section showing a second embodiment of magnetic head supporting apparatus according to the present invention;
Figures 12(c) and 12(d) are top plan views of first and second supporting plates respectively of the second embodiment shown in Figure 12(b);
Figures 13 to 17 are top plan views showing main portions of a supporting plate of third, fourth, fifth, sixth and seventh embodiments of the present invention;
Figures 18 and 19 are sections showing main portions of an eighth embodiment of a magnetic head supporting apparatus according to the present invention;
Figure 20 is a section showing a main portion of a ninth embodiment of a magnetic head supporting mechanism according to the present invention;
Figures 21 and 22 are diagrams illustrating how anti-vibration effects may be improved;
Figure 23 is a section showing the main portion of a ninth embodiment of a magnetic head supporting apparatus according to the present invention;
Figure 24 is a top plan view showing a main portion of the apparatus of Figure 23;
Figures 25 and 26 are diagrams illustrating how the present invention improves anti-vibration effects, Figures 25 and 26 being obtained by plotting unrecordable and unreproduceable error regions against a vibratory frequency and a vibratory acceleration for embodiments of the present invention and of the prior art, respectively; and
Figure 27 is a section showing a main portion of a tenth embodiment of the present invention.

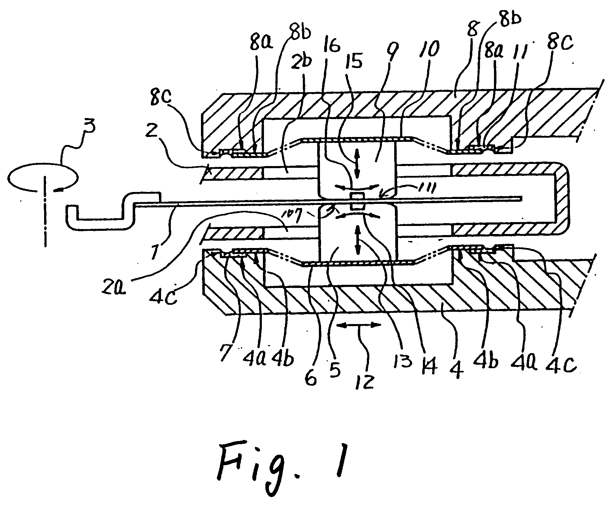

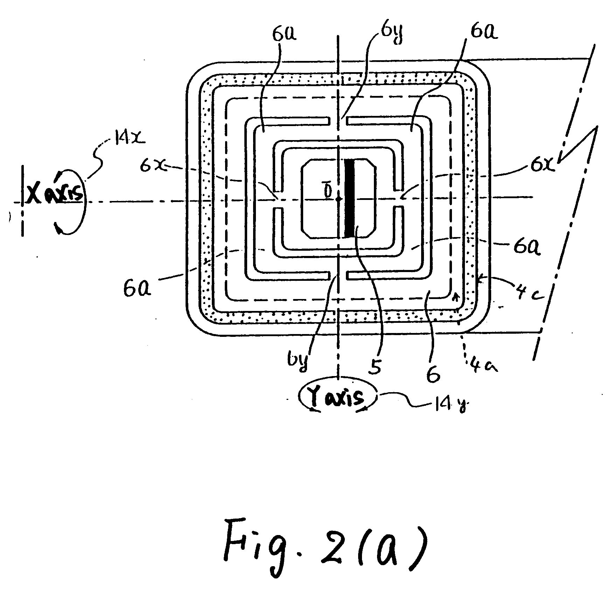

In Figure 1 there is therefore shown a magnetic head supporting apparatus according to the present invention which comprises a first carriage 4 which is capable of movement in the radial directions (as indicated by arrows 12) of a flexible or floppy disk 1 which is made of a material for use in magnetic recording and reproduction. A first magnetic head 5 is mounted on the first carriage 4 through a first supporting plate 6, the first magnetic head 5 being adapted to make contact with one side of the flexible disk 1. The first supporting plate 6 is arranged to support the first magnetic head 5 with freedom of movement in the radial and tangential directions of the flexible disk 1.

The flexible disk 1 is rotatable as indicated by the arrow 3. A second carriage 8 is rotatably mounted (by means not shown) and faces the first magnetic head 5, the second carriage 8 being mounted for the said radial movement so as to be adapted to follow the first carriage 4. Thus the second carriage 8 may be carried by the first carriage 4 to follow the latter. A second magnetic head 9 is mounted on the second carriage 8 through a second supporting plate 10. The centre of rotation of the second carriage 8 is spaced by 30mm to 100mm from the magnetic head 9. The second magnetic head 9 is arranged to make contact with the opposite side of the flexible disk 1 so as to hold the flexible disk 1 between itself and the first magnetic head 5. The second supporting plate 10 is arranged to support the second magnetic head 9 with freedom of movement in the radial and tangential directions of the flexible disk 1.

As explained in greater detail below, the first and second supporting plates 6, 10 support the first and second magnetic heads 5, 9 so that the said heads can move in a generally perpendicular direction to the plane of the flexible disk 1.

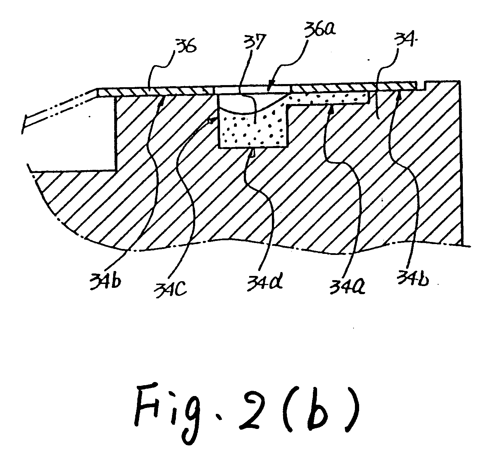

The first supporting plate 6 may be constructed of a very thin sheet of metal or resin and may have a size of about 20mm x 20mm. The first supporting plate 6 is formed with grooves by means of which a tie bar 6y (Figure 2(a)) is allowed to twist in the radial directions (as indicated by arrows 14y) of the flexible disk 1 whereas an arm 6a joining the tie bar 6y to a tie bar 6x is allowed to warp or flex so that the first magnetic head 5 can rotate on the centre line (i.e. the Y axis) of the tie bar 6y following the inclination of the flexible disk 1 (as shown in Figure 1) to come into close contact with the flexible disk 1. Likewise, the tie bar 6x, is allowed to twist in the tangential directions (as indicated by arrows 14x) of the flexible disk 1 whereas the arm 6a is allowed to flex so that the first magnetic head 5 can rotate on the centre line (i.e. the X axis) of the tie bar 6x following the inclination of the flexible disk 1 (as shown in Figure 1). The thickness and shape of the first supporting plate 6 are so determined that the torsional rigidities in the tangential and radial directions of the flexible disk 1 are about 400 g ·mm/rad to about 3,000g.mm/rad.

The second supporting plate 10 is also made to have a structure similar to that of the first supporting plate 6 and is given freedom of movement in the tangential and radial directions of the flexible disk 1 by similar means (not shown) so that the second magnetic head 9 can rotate following the inclination of the flexible disk 1 (as shown in Figure 1). The thickness and shape of the second supporting plate 10 are determined like that of the first supporting plate 6 such that the torsional rigidities in the directions of the flexible disk 1 are set at about 400 g · mm/rad to 3,00 g · mm/rad.

Moreover, the first and second supporting plates 6 and 10 support the first and second magnetic heads 5 and 9, respectively, such that the heads 5 and 9 can move in generally perpendicular directions (as indicated by arrows 13 and 15 in Figure 1) to the flexible disk plane. Since the first and second supporting plates 6 and 10 are resilient in those directions, their respective arms 6a (as shown in Figure 2(a)) and 10a (not shown in the drawings) are caused to flex by the force (which will be called the ¨head pressing force¨) constituted by pressing the second magnetic head 9 toward the first magnetic head 5 until they are stabilized in the flexing state.

The flexibility of the first supporting plate 6 allows the first magnetic head 5 to roll without any directional rstriction, as indicated by the arrows 14. Similarly, the flexibility of the second supporting plate 10 allows the second magnetic head 9 to roll without any directional restriction, as indicated by the arrows 16.

The first and second magnetic heads 5, 9 are movable in the directions of the arrows 13, 15 through apertures 2a, 2b respectively in a jacket or cartridge 2.

Urging means (not shown) corresponding to the head pressing spring 58c, are provided for urging the first and second magnetic heads 5, 9 towards each other.

As has been described hereinbefore, the thicknesses and shapes of the first and second supporting plates 6 and 10 are such that the spring rate of the first and second supporting plates 6 and 10 in the said directions is about 50 g/mm or more.

In the construction described above, the first and second magnetic heads 5 and 9 are supported on the plates 6 and 10 respectively so that they can move in directions (as indicated by the arrows 13 and 15) which are generally perpendicular to the plane of the flexible disk 1. This construction makes it possible to eliminate the first and second pivots 54a and 58a (as shown in Figure 3(a)) which have been indispensable in the prior art. This makes it possible to eliminate the reduction in the ability of the heads to follow the flexible disk due to the pivots, as has been the case in the prior art described above. If, however, the supporting plates of the prior art are used as they are, the first and second supporting plates 56 and 60 will assume a high degree of warp or flexure in directions generally perpendicular to the plane of the flexible disk 51, thus raising a practical problem.

In order to solve this problem, it is necessary to increase the rigidities of the supporting plates in the above-specified direction. With excessively high rigidities, on the contary, the thicknesses of the supporting plates will naturally increase to raise the torsional rigidities, These excessively high torsional rigidities will in turn cause a deterioration in the aforementioned ability of the heads to follow the flexible disk.

From the discussion so far, it can be concluded that both the rigidities of the supporting plates generally perpendicular to the plane of the flexible disk and the torsional rigidities are preferably within limited ranges which are experimentally determined. That is to say, the spring rates taken generally perpendicular to the plane of the flexible disk are preferably about 50 g/mm or more, and the torsional rigidities in the radial and tangential directions of the flexible disk are preferably about 400 g · mm/rad to 3,000 g·mm/rad. These rigidity values are calculated from the following data.

First of all, as shown in Figure 1, the spring rates generally perpendicular (as indicated by the arrows 15 and 13) to the plane of the flexible disk are restricted by the following points. The above-specified head pressing force (which may have a valve of about 20 g, as will be described later in more detail) is exerted to flex the first and second supporting plates 6 and 10 in the directions of the arrows 13 and 15. As a result of such flexure, the gap between the mounting portion of the first supporting plate 6 on the first carriage 4 and the mounting portion of the second supporting plate 10 on the second carriage 8 is narrowed. Generally speaking, the height of a magnetic head (i.e. the gap between the first supporting plate 6 and the contact face 107 of the first magnetic head) is about 2.5 mm so that the gap between the two supporting plates is about 5mm. Moreover, the first and second supporting plates 6 and 10 are flexed 0.4 mm (if the spring rate in those directions is assumed to be 50 g/mm), respectively, by the above-specified head pressure so that the gap between the two supporting plates is reduced to 4.2 mm.

In the case of a flexible disk of 3.5 inches, (8.89 cms) for example, the jacket 2 for enveloping the flexible disk 1 has its thickness standardized to about 3.4 mm.

With the larger flexures, the jacket 2 for enveloping the flexible disk 1 may possibly come into contact with the first or second supporting plates 6 or 10 or the first or second carriage 4 or 8. This contact may be caused by dimensional variation of the first and second carriages 4 and 8 and of the jacket 2. If this contact occurs, a desired head pressing force cannot be applied to the magnetic heads to generate a sufficient reproduction output. In order to overcome this problem, it is necessary that the spring rate in those directions be 50 g/mm or more.

Here, the equation of $\text{F = kx}$ holds if the pressing force of the first carriage 8 is designated as F, the flexure of the supporting plates 6 and 10 in the directions of the arrows 13 and 15 is designated as x, and the spring rate of the supporting plates 6 and 10 perpendicular to the plane of the magnetic disk 7 is designated as k. In the unloaded state, the displacement x = 0. When the state changes from the unloaded one to a head loaded one, the second magnetic head 9 rapidly drops so as to impact against the first magnetic head 5 through the flexible disk 1 so that the displacement is at a maximum (although not shown) of x + α (wherein α designates an increment of the flexure due to the said impact). The supporting plates 6 and 10 have their spring rates determined for damping the impact on the premise that they have elastic limits higher than the load at that maximum displacement, i.e. the maximum impact.

The torsional rigidity of the first supporting plate 6 has two components, namely the torsional rigidity components of the tie bars 6x and 6y, and the contribution to the torsional rigidity resulting from the flexure of the arm 6a. The latter contribution is set higher than the former components, as in the second supporting plate 10.

On the other hand, the rigidity generally perpendicular to the plane of the flexible disk 1 is also determined substantially depending upon the degree of flexure of the arms 6a and 10a. If the thicknesses and shapes of the arms 6a and 10a are so determined that the said rigidities are 50 g/mm or more,the spring rates of the contribution to the torsional rigidities due to the flexure of the arm 6a, will naturally rise with the torsional rigidity of the supporting plates as a whole. In order to reduce these torsional rigidities,what can be done is to thin and elongate the tie bars 6x and 6y or 10x (not shown) or 10y (not shown). Then, the first and second supporting plates 6 and 10 and the first and second carriages 4 and 8 are so large that the tie bars 6x, 6y, 10x and 10y have their durabilities impaired for practical use.

From the above discussion it can be said that the said torsional rigidities are preferably 400 g·mm/rad, which is a proper and realizable value.

We will now consider the preferred upper limit of the torsional rigidities of the supporting plates in order that the previously mentioned ability to follow the flexible disk is not impaired. This ability depends upon the afore-mentioned head pressing force and the torsional rigidities of the plates and is improved by a high head pressure force and low torsional rigidities.

However, the high head pressing force has the disadvantage that the life of the flexible disk is shortened. For example, a magnetic recording apparatus using a flexible disk of 5.25 inches (13.34 cms) previously used a head pressing force of about 30 g. In recent years, however, the head pressing force applied has frequently been about 20 g so as to extend the life of the flexible disk.

The head pressing force may therefore, in the case of the present invention too, be assumed to be about 20g so as to provide a basis from which one can calculate the preferred rigidities of the supporting plates for satisfactory ability to follow the flexible disk.

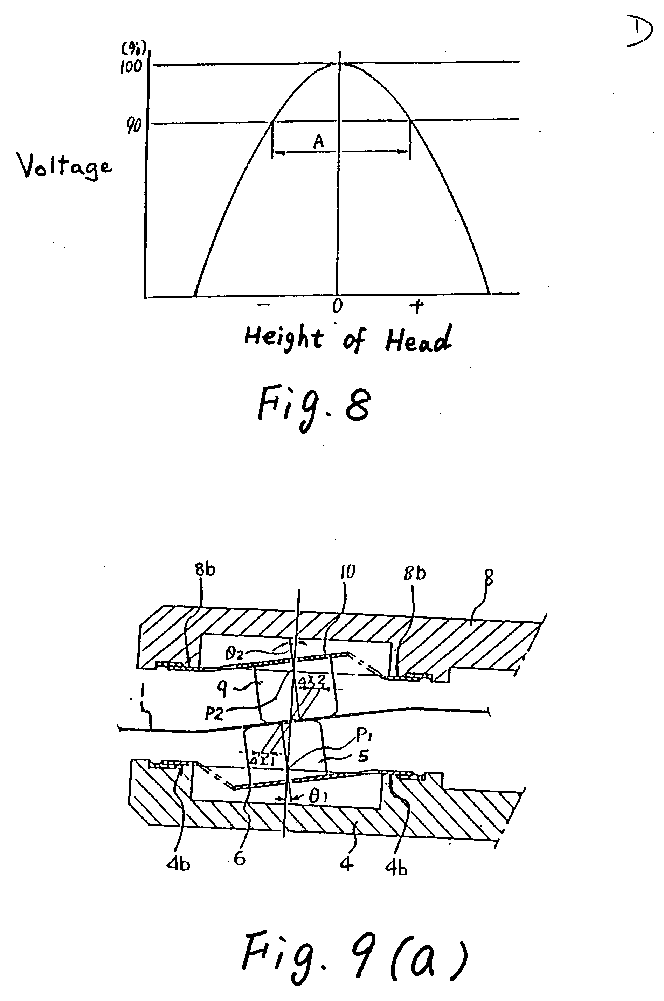

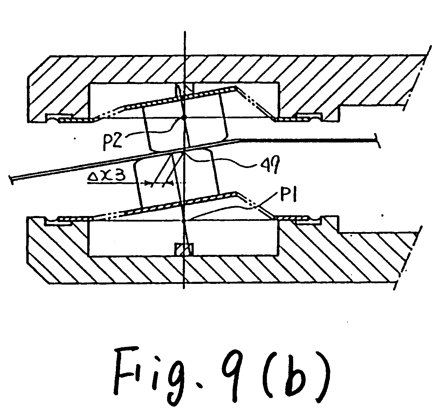

Figure 8 is a diagram for illustrating the reproduced output of a double-sided magnetic recording apparatus. The abscissa represents the relative distance (which will be called the "head height¨) between the nominal plane of the flexible disk 1 and the contact face 107 of the first magnetic head 5 shown in Figure 1 with the magnetic recording medium, whereas the ordinate represents the reproduced output voltages of the magnetic head 5 as a ratio to the maxumum reproduced output voltage.

Figure 8 shows that a sufficient reproduced output voltage cannot be obtained no matter whether the head height is increased or decreased. The ability of the heads to follow the flexible disk can be said to be better for a larger allowable width (as designated at A) of the head height, at which a reproduced output voltage of 90% or more of the maximum value is obtained. For an allowable width A of 0.15 mm or less, it becomes very difficult to adjust the head height to an allowable width A, so that mass-production is made difficult. The allowable width A of the head height was actually measured for supporting plates of various torsional rigidities and tabulated in Tables 1 and 2 below.

Table 1 enumerates measured values of the allowable width of the head height of the magnetic head supporting mechanism for a flexible disk of 3.5 inches (8.89 cms) against the torsional rigidities of the supporting plate. Table 2 enumerates measured values of the allowable width of the head height of the magnetic head supporting mechanism for a flexible disk of 5.25 inches (13.34 cms) against the torsional rigidities of the supporting plates.

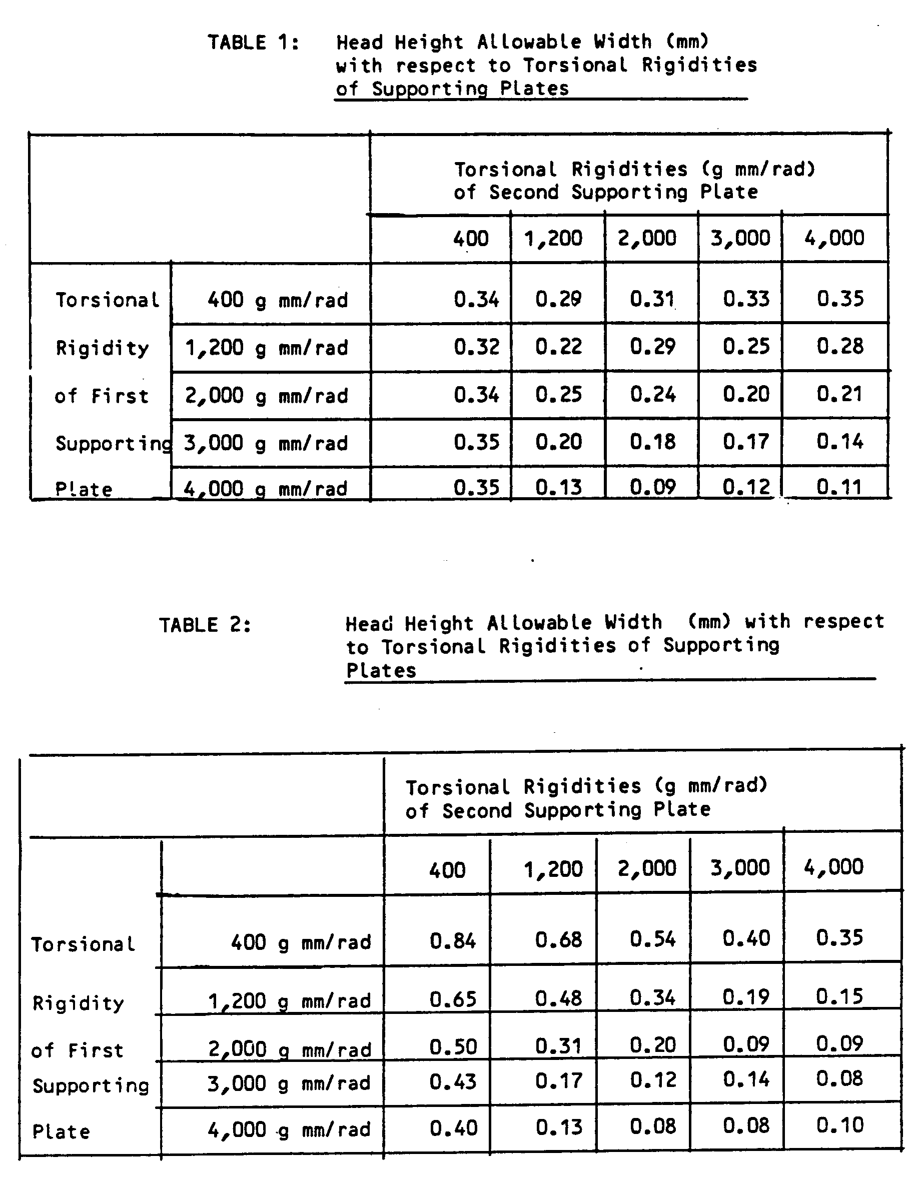

From Table 1, it is found that in the case of a flexible disc of 3.5 inches (8.89 cms) for use in a magnetic head supporting mechanism, if the head height allowable width A is not more than 0.15 mm, the magnetic head supporting mechanism is unsuitable for mass-production if the torsional rigidity exceeds 3,000 g·mm/rad. From Table 2, it is also found that, in the case of a flexible disc of 5.25 inches (13.34 cms) for use in a magnetic head supporting mechanism, if the head height allowable width A is not more than 0.15 mm, the magnetic head supporting mechanism is unsuitable for mass-production if the torsional rigidity exceeds 2,000 g.mm/rad.

If the torsional rigidities are summarized to take account of the above discussion, it can be said that a range of about 400 g.mm/rad to 3,000 g·mm/rad is preferable for maintaining the said ability to follow the flexible disc at a satisfactory level.

A magnetic head supporting apparatus according to the present invention for use in a magnetic recording apparatus for a double-sided medium as described above may therefore have the following advantages.
(1) In the magnetic head supporting apparatus of the first known type (i.e. the double-sided gimbal type), the rigidities of the supporting plates are made lower than necessary so that the magnetic heads are liable to be inclined in response to an inclination of the flexible disk 1 (as shown in Figure 3(a)). This results in the afore-mentioned ¨off-track¨ displacement. In the preferred form of the present invention on the contrary, the torsional rigidities of the supporting plates are made about 2 to 15 times as high as those of the prior art so that the first and second supporting plates 6 and 10 (as shown in Figure 1) and the first and second magnetic heads 5 and 9 are less inclined so as to reduce the ¨off-track¨ displacement.
   Moreover, the magnetic heads are made movable in the directions generally perpendicular to the plane of the flexible disk 1 so that the ¨off-track¨ displacement is further reduced with the following effects as illustrated in Figures 9(a) and 9(b).
   As has been described hereinbefore, the first supporting plate 6 flexes in directions generally perpendicular to the plane of the flexible disk 1 so that it is balanced with respect to the afore-mentioned head pressing force. In this balanced state, the first magnetic head 5 is inclined on an imaginary fulcrum P1 which exists in a plane generally flush with a mounting face 4b of the first carriage 4 and on an imaginary line joining the mounting face 4b. If the angle ϑ1 of inclination of the first magnetic head 5 remains the same, the ¨off-track¨ displacement Δx1 becomes smaller as the flexure of the first supporting plate 6 increases. Likewise, the second supporting plate 10 flexes in directions generally perpendicular to the plane of the flexible disk 1 so that it is balanced with respect to the afore-mentioned head pressing force. In this balanced state, the second magnetic head 9 is inclined on an imaginary fulcrum P2 which exists in a plane generally flush with a mounting face 8b of the second carriage 8 and on an imaginary line joining the mounting face 8b. If the angle ϑ2 of inclination of the second magnetic head 9 remains the same, the off-track displacement Δx2 becomes smaller as the flexure of the second supporting plate 10 increases.
   In this construction in which the first and second magnetic heads 5 and 9 are inclined together with the first and second supporting plates 6 and 10, the ¨off-track¨ displacement is far smaller than that of the magnetic head supporting apparatus of the known double-sided gimbal type or the Tandon type. Even if data are reproduced on the flexible disk in this state, the reduction of the amplitude of the reproduced signals is so slight that its influence upon the reproducing function ray be neglected.
2) The first and second supporting plates 6 and 10 have spring actions generally perpendicular to the plane of the flexible disk 1 so that they act as shock-absorbing members against the impact in the head loaded state. In this head loaded state, the first and second magnetic heads 5 and 9 damp the impact upon the flexible disk 1. This damping effect can extend the life of the flexible disk 1 so as to improve the reliability of the magnetic recording apparatus.
3) Since the rigidities of the supporting plates are higher than those of the prior art, these supporting plates become stronger in relation to an external force, so that the jacket 2 for enveloping the flexible disk 1 is unlikely to be broken as a result of being scratched, whereby to improve the reliability.

As shown in Figure 1, the supporting plates are flexed by the afore-mentioned head pressing force when in the head loaded state. Even in this state of flexure, however, the first and second magnetic heads 5 and 9 are preferably parallel to their positions before such flexure.

This may be achieved by taking the following steps. The first step is to arrange that the centre O of a contact face 107 (as shown in Figure 1) of the first magnetic head 5 with the flexible disk 1, i.e. the head face 107, is aligned with the point of intersection of the centre line (as indicated by an X axis in Figure 2(a)) of the tie bar 6x of the supporting plate 6 and the centre line (as indicated by a Y axis in Figure 2(a)) of the tie bar 6y, as viewed in the directions (as indicated by the arrows 13) perpendicular to the head face 107, so that the first magnetic head 5 is not inclined when a force is applied to the head face 107.

In other words, the tie bars 6x and 6y are so arranged that the magnetic heads may be inclined on the centre O of the head face 107 as an imaginary fulcrum.

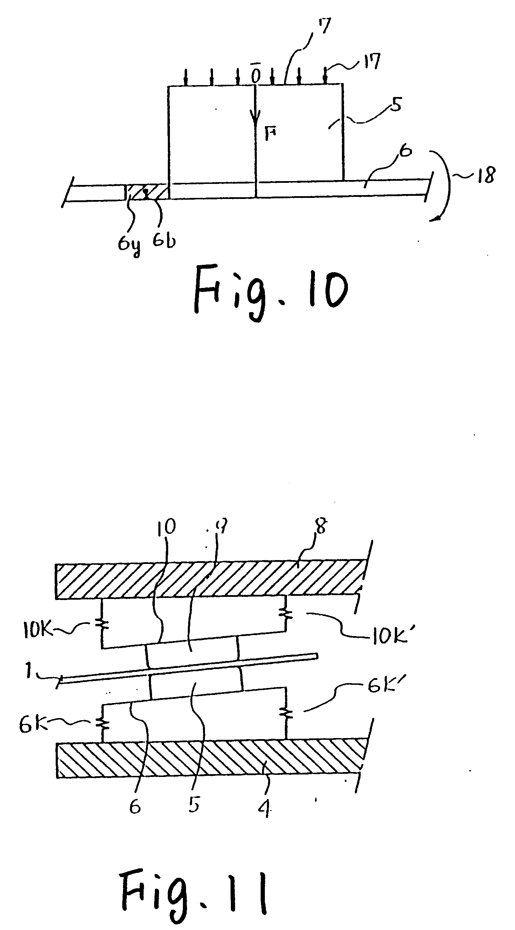

Figure 10 is a diagram illustrating the inclination of a magnetic head in dependence upon the position of a tie bar.

The first magnetic head 5 is mounted on the first supporting plate 6 and can rotate on the tie bar centre 6b (which is represented as the Y axis in Figure 2(a)).

Moreover, the afore-mentioned head pressing force is exerted as a pressure as indicated by arrows 17 upon the head face 107 by the opposite magnetic head 9 (not shown in Figure 10). Since this pressure can be replaced by a resultant force F exerted upon the centre of the head face 107, it acts as a moment T (as indicated by an arrow 18) on the afore-mentioned Y axis so that the magnetic head 5 becomes inclined. In order to prevent this inclination, the Y axis is arranged on the line of action of the resultant force F. Then the moment T is not established so that the inclination can be prevented if the tie bar centre 6b (i.e. the Y axis) is generally aligned to the centre O of the head face 107, as viewed in directions perpendicular to the head face 107.

This discussion similarly applies to the X axis, and the inclination is avoided if the point of intersection of the X and Y axes is aligned generally with the centre of the head face 107, as viewed in directions perpendicular to the head face 107. This is also true for the second supporting plate 10.

Next,a second step will be described as follows. If the four arms 6a (as shown in Figure 2(a)) of the supporting plate 6 have different rigidities in directions generally perpendicular to the plane of the flexible disk 1 even if the first step thus far described is carried out, the arm or arms having a lower rigidity will flex more than the arm or arms having a higher rigidity so that the first and second magnetic heads 5 and 9 are inclined. This discussion similarly applies to the second supporting plate 10.

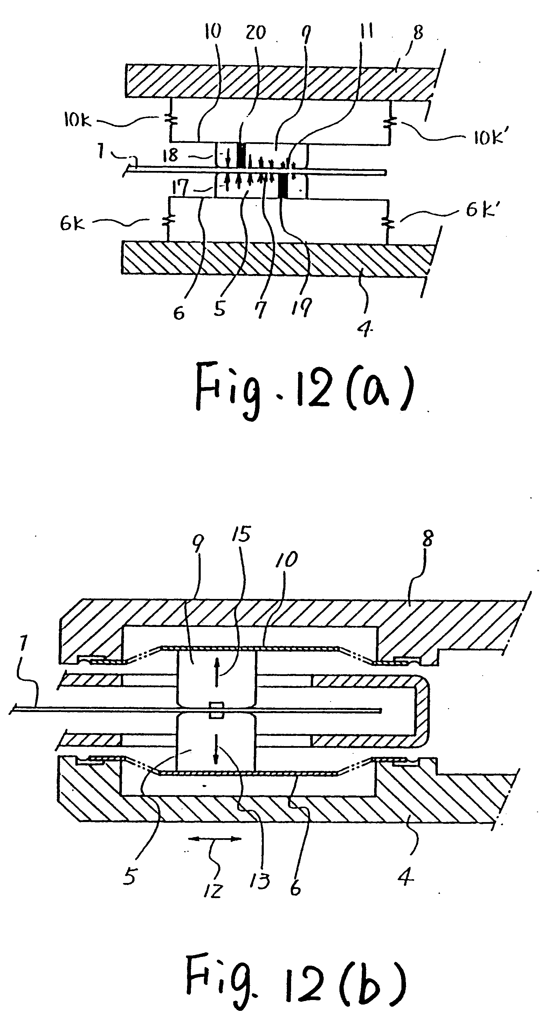

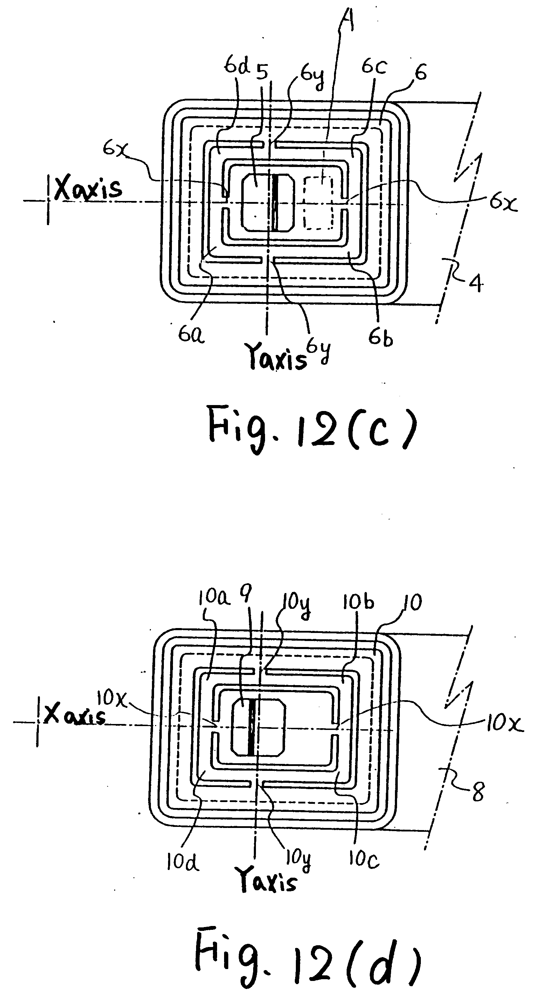

Figure 11 is a diagram illustrating the inclinations of the magnetic heads due to the difference in the rigidity between the arms of the supporting plates.

Figure 12(a) is a diagram illustrating the pressure upon the head face due to the rigidities of the said arms.

In Figures 11 and 12(a), the first supporting plate 6 receiving the head pressing force flexes to support the first magnetic head 5, and the second supporting plate 10 also flexes to support the second magnetic head 9 so that they hold the flexible disk 1 therebetween.

One of the rigidities of the arms 6a of the first supporting plate is designated at 6k whereas the other is designated at 6kʹ if the rigidities are different. Likewise, the rigidities of the arms 10a of the second supporting plate 10 are designated at 10k and 10kʹ.

Figure 11 shows the case in which the rigidity 6kʹ is greater than the rigidity 6k whereas the rigidity 10k is greater than the rigidity 10kʹ. In this case, the flexure at the more rigid side is smaller than that at the less rigid side, so that the first and second magnetic heads 5 and 9 are inclined.

In order to eliminate these inclinations of the first and second magnetic heads 5 and 9, it is sufficient to equalize either the rigidities 6k and 6kʹ, and the rigidities 10k and 10kʹ of the arms, or to equalize the rigidities 6k and 10k and the rigidities 6kʹ and 10kʹ of the same arms.

Figure 12(a) shows the case in which the rigidity 6k is higher than the rigidity 6kʹ whereas the rigidity 10k is higher than the rigidity 10kʹ and in which the rigidities 6k and 10k and the rigidities 6kʹ and 10kʹ of the arms are equal.

In this case, the afore-mentioned head pressing pressure 18 applied to the head face 7 of the first magnetic head 5 and the head face 11 of the second magnetic head 9 is higher for the arms having the higher rigidity and lower for the arms having the lower rigidity.

Therefore, a core 20 for effecting the recording and reproducing operations of the second magnetic head 9 is positioned with respect to the flexible disk 1 radially inwardly of a core 19 for effecting the recording and reproducing operations of the first magnetic head 5. Thus, the danger that the recording density might be too high for the recording and reproducing operations can be eliminated by raising the face pressing force to improve the afore-mentioned ability to follow the flexible disk 1.

In other words, if the rigidities of the arms facing the flexible disk between the two supporting plates are made substantially equal whereas the rigidity of the arm closer to the core 20 of the second magnetic head 9 is made higher, the afore-mentioned head pressing pressure at the side closer to the core 20 of the second magnetic head 9 becomes higher. As a result, the core 20 for effecting the recording and reproducing operations of the second magnetic head 9 is positioned radially inwardly with respect to the flexible disk 1 so that any difficulties arising in the recording and reproducing operations due to the high recording density can be eliminated so as to improve the overall performance of the magnetic recording apparatus.

This construction can be used in the case in which the arms of the supporting plates are asymmetric, as will be described as an example with refernece to Figures 12(b), 12(c) and 12(d).

Figure 12(b) is a section showing the main portion of a second embodiment of a magnetic head supporting apparatus according to the present invention; Figure 12(c) is a top plan view of a first supporting plate forming part of the said second embodiment; and Figure 12(d) is a top plan view which shows a second supporting plate forming part of the said second embodiment.

In Figure 12(b), the first carriage 4 is mounted so as to move in the radial directions (as indicated by the arrows 12) of the flexible disk 1 and carries the first magnetic head 5 through the first supporting plate 6. A broken-line frame A in Figure 12(c) indicates a space provided for mounting lead wires, which makes the arms asymmetric. The second carriage 8 is rotatable (by means not shown) and faces the first magnetic head 5, the second carriage 8 being mounted to follow the first carriage 4 and carrying the second magnetic head 9 through the second supporting plate 10.

The first supporting plate 6 has its arms 6a, 6b, 6c, and 6d (Figure 12(c)) which flex in a direction generally perpendicular to the plane of the flexible disk 1, i.e. in the direction indicated by the arrow 13 in Figure 12(b) until the arms are stabilized in their slightly flexed states. The second supporting plate 10 has its arms 10a, 10b, 10c and 10d (as shown in Figure 12(d)) which flex in a direction generally perpendicular to the plane of the flexible disk 1 (as indicated by the arrow 15 in Figure 12(b)) until the arms are established in their slightly flexed states.

In order that the torsional rigidity of the tie bar 6y or 6x of the first supporting plate 6 may be substantially equal to that of the tie bar 10y or 10x of the second supporting plate 10 and that the bending rigidities of the arms 6a, 6b, 6c and 6d of the first supporting plate 6 may be substantially equal to those of the arms 10a, 10b, 10c and 10d of the second supporting plate 10, both the tie bars (6x and 10x, and 6y and 10y) and the arms (6a and 10a, 6b and 10b, 6c and 10c, and 6d and 10d) of the first and second supporting plates 6 and 10 are made to have absolutely identical shapes, and the first and second supporting plates 6 and 10 are made of an identical material and have an identical thickness.

As in the embodiment described above, the two supporting plates are positioned to face each other on opposite sides of the plane of the flexible disk, and the flexible members are made to have substantially identical rigidities. The first and second magnetic heads 5 and 9 are stable without any inclination even if they hold the flexible disk 1 therebetween, and their ability to follow the flexible disk can be improved so that they can have their recording and reproducing operations stabilized.

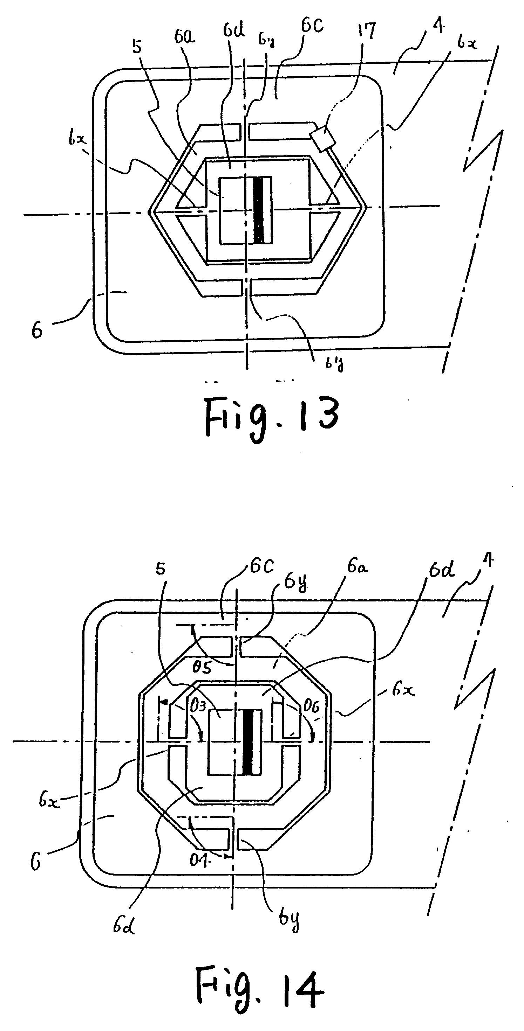

Figures 13, 14, 15, 16 and 17 are top plan views showing third, fourth, fifth, sixth and seventh embodiments of a first supporting plate 6 which may be used in the present invention.

For simplicity of explanation, only the first supporting plate will be described with reference to Figures 13 to 17, but this description similarly applies to the second supporting plate which is not shown therein.

The first magnetic head 5 is supported on the first supporting plate 6 which in turn is carried by the first carriage 4. The first supporting plate 6 is formed with axially extending grooves by means of which the first supporting plate 6 is divided so as to have an outer frame 6c which is fixed on the first carriage 4; tie bars 6x and 6y for establishing the said torsional rigidities; a mounting portion 6d for mounting the first magnetic head 5; and an arm 6a for providing for flexure and torsional rigidity. As a result, the magnetic head 5 can be inclined.

In the magnetic head supporting mechanism of the present invention, moreover, the supporting plate may, if desired, flex when in the afore-mentioned head loaded state so as to absorb shocks. At this time, the first and second supporting plates 6 and 10 are subjected to a high stress, which is liable to be concentrated at the two ends of the tie bars 6x, 6y, 10x and 10y so as to affect their durability.

In order to prevent these stress concentrations, the two ends of the tie bars 6x, 6y, 10x and 10y are preferably connected as smoothly as possible to the arms 6a and 10a.

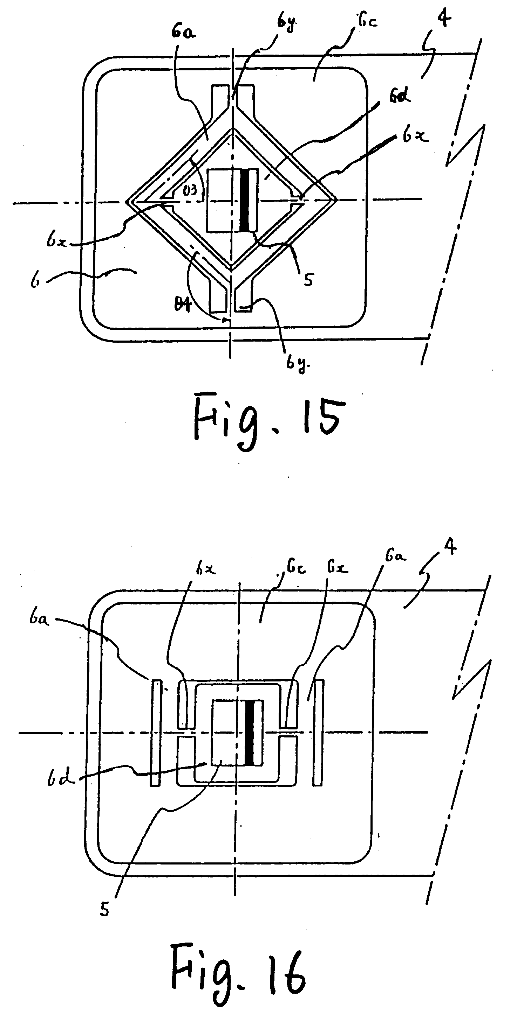

From this point of view, the shape of the supporting plates is of importance as follows. In the arm shape shown in Figure 15, the angle ϑ contained between the tie bar 6x and the arm 6a is disadvantageously small and it should desirably be 90° or more, as shown in Figure 14.

Likewise, the angle ϑ4 contained between the tie bar 6x and the arm 6a is likewise desirably at least 90°. By the same reasoning, not only the angle ϑ5 contained between the tie bar 6x and the outer frame 6c but also the the angle ϑ6 contained between the tie bar 6x and the magnetic head supporting portion 6d should desirably be at least 90°. These angles naturally also apply to the second supporting plate 10.

In addition, the first or second magnetic head 5 or 9 may be vibrated during the recording and reproducing operations so as to make the reproduction output abnormal by virtue of the friction between the flexible disk 1 (as shown in Figure 1) and the first and second magnetic heads 5 and 9. This phenomenon is called the ¨head singing¨. In order to prevent this phenomenon, a member 17 (as shown in Figure 13) made of a shock absorbing material such as rubber may be secured to the first supporting plate 6 and/or to the second supporting plate 10. This shock absorbing effect is enhanced if the member 17 is used to bridge either the arm 6a and the outer frame 6c, and the arm 10a and the outer frame 10c, or the arm 6a and the magnetic head mounting portion 6d and the arm 10a and the magnetic head mounting portion 10d.

The anti-vibration effect is, moreover, improved by leaving out the pivots as in the illustrated example of the prior art illustrated in Figures 3(a) and 3(b).

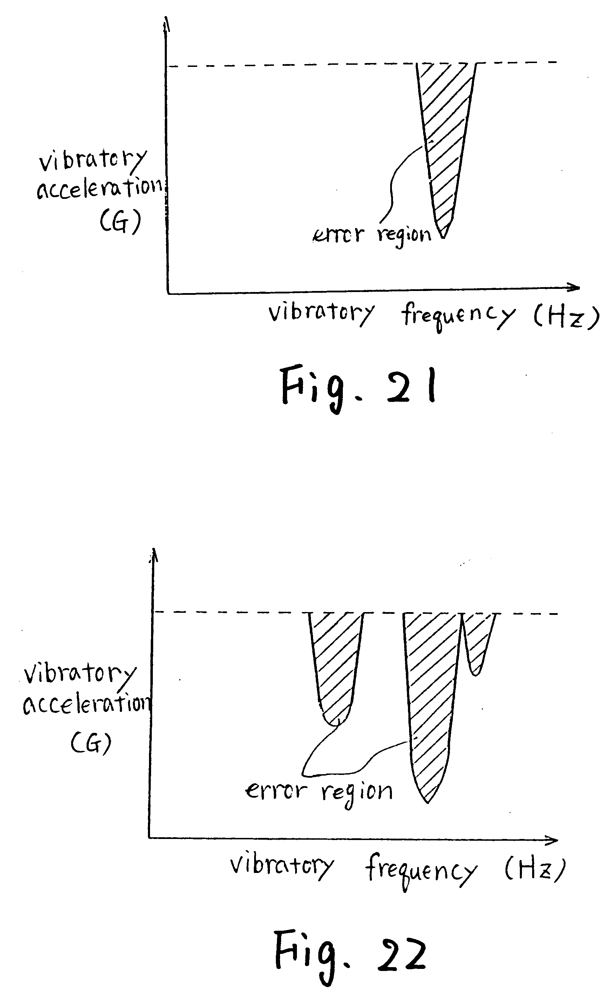

Figure 21 shows, in relation to the vibratory frequency (Hz) and the vibratory acceleration (G), an error region in which recording and reproducing operations are impossible in the case of embodiments of the present invention described above. The error region appears in a vibratory frequency band which is resonant with that of the supporting plates.

Figure 22 shows, in relation to the vibratory frequency (Hz) and the vibratory acceleration (G), the error regions in which recording and reproducing operations are impossible in the case of the prior art. In Figure 22, the error regions appear in several vibratory frequency bands, which is different from the case of the embodiments of the present invention whose characteristics are illustrated in Figure 21. This is because the resonant vibrations of other mechanical components are allowed to propagate through the pivots to the supporting plates because these plates are supported by the pivots. As a result, in the embodiments in which the supporting plates are not supported by the pivots, the vibration of the remaining mechanical components will not propagate to improve the anti-vibration.

Next, the fixing structure of the supporting plates 6 and 10 will be described in more detail with reference to Figures 1 and 2(a).

The magnetic head supporting apparatus of the prior art which is shown in Figure 3(a) has the following several problems which need to be solved.

As has been described with reference to Figure 3(a), the first and second supporting plates 56 and 60 are fixed on the mounting faces 54b and 58b, respectively, and are covered with adhesives 57 and 61, respectively.

The disk 51, however, is mounted in a cartridge 52 which is of a standard size. In the construction shown in Figure 3(a) in which the adhesives 57 and 61 cover the first and second supporting plates 56 and 60, respectively, the adhesives 57 and 61 inevitably extend towards the cartridge 52 so as to reduce the gaps between the adhesives 57 and 61 and the cartridge 52.

The first and second carriages 54 and 58 move in the directions of a double headed arrow 62 for the recording and reproducing operations. If there is slight difference in the size of the cartridge 52, the cartridge 52, during the said movement of the carriages, will come into contact with the adhesive 57 or 61. As a result, when the first and second magnetic heads 55 and 59 hold the disk 51 under a desired head pressing force for the recording and reproducing operations, this head pressing force may change to such an extent that the intrinsic recording and reproducing functions are lost.

This problem is solved by the embodiment shown in Figure 1. Specifically, the first carriage 4 is formed with a space 4a which is located in a portion of a mounting face 4b thereof and at a desired spacing from the first supporting plate 6. A wall 4c extends from the space 4a so as to surround the outer circumference of the first supporting plate 6, as shown in Figure 2(a) which is a top plan view showing the first magnetic head 5 and the first supporting plate 6. The wall 4c has a desired height with respect to the first supporting plate 6, as shown in Figure 1, i.e. it extends to the upper surface of the latter.

As shown in Figures 1 and 2(a) moreover, the first supporting plate 6 is fixed on the mounting face 4b by filling up the space 4a with adhesive 7, and the wall 4c constitutes an adhesive flow-out preventing means for preventing the adhesive 7 from flowing out.

Moreover, the second carriage 8 is formed with a space 8a which is located in a portion of a mounting face 8b thereof and at a desired spacing from the second supporting plate 10. A wall 8c extends from the space 8a so as to surround the outer circumference of the second supporting plate. The wall 8c has a desired height with respect to the second supporting plate 10, as shown in Figure 1, i.e. it extends to the lower surface of the latter. As shown in Figure 1, moreover, the second supporting plate 10 is fixed on the mounting face 8b by filling up the space 8a with adhesive 11, and the wall 8c constitutes an adhesive flow-out preventing means for preventing the adhesive 11 from flowing out.

The fixing structures of the first and second supporting plates 6 and 10 will be described further below, but since these fixing structures are the same, reference will only be made to the fixing structure of the first supporting plate 6, and a description of the fixing structure of the second supporting plate 10 will be omitted.

As has been described with reference to Figure 1, the space 4a located at the desired spacing from the first supporting plate 6 is formed in a portion of the mounting face 4b of the first carriage 4, and the wall 4c, which has a desired height with respect to first plate 6, is formed as a adhesive flow-out preventing means such that it surrounds the outer circumference of the first supporting plate 6. The space 4a is filled up with the adhesive 7 so that the first supporting plate 6 is fixed on the mounting face 4b. Then the adhesive 7 is caused on the one hand to penetrate into the space 4a by capillary action and on the other hand it is drawn along both the wall 4c, which acts as the adhesive flow-out preventing means, and the outer circumference of the first supporting plate 6 by the action of surface tension, the space 4a extending radially outwardly of the outer circumference of the first supporting plate 6, as shown in Figure 1. As a result, the adhesive 7 is prevented from bulging outwardly and forms a meniscus which fixes the first supporting plate 6 in position.

If the space 4a has a depth from the first supporting plate 6 of 0.05mm to 0.3mm, for example, the adhesive 7 may preferably be anaerobic so as to effect a dramatic improvement in its workability and reliability.

The said fixing structure has sufficient strength by reason of the fact that the adhesive 7 fills up the space 4a. In the portion of the space 4a which is positioned outwardly of the outer circumference of the first supporting plate 6, the adhesive 7 is prevented from bulging. Moreover, in the meniscus portion, the adhesive 7 makes no positive contribution to the adhesion strength. On the contrary, the wall 4c, which acts as the adhesive flow-out preventing means, not only performs the adhesive flow-out preventing function but also acts as an adhesive filling buffer means so that dispersion of the charge of the adhesive 7 is prevented to stabilize the adhesion.

The wall 4c is constructed to continuously surround the outer circumference of the first supporting plate 6, as shown in Figure 2(a). The adhesive 7 will be caused to penetrate sufficiently into the space 4a by the said capillary action, if a desired position is filled up with a desired amount, thereby to ensure reliable adhesion and to drastically improve adhesion workability.

On the other hand, the wall 4c need not be such that it entirely surrounds the first supporting plate 6, but may have a plurality of spaced apart portions (not shown) which perform the afore-mentioned adhesive flow-out preventing function and adhesive filling buffer function, thus effecting highly reliable adhesion. Furthermore, the filling of the adhesive 7 can be easily effected by multi-point filling means even if the wall 4c has a plurality of spaced apart portions.

As a result of the fixing structures of the first and second supporting plates 6 and 10 thus far described, the adhesives 7 and 11 can facilitate highly reliable and stable fixtures without any bulges. There is adequate spacing between the adhesives 7 and 11 and a standard cartridge or jacket 2, as shown in Figure 1, and the first and second carriages 4 and 8 can move freely during the recording and reproducing operations in the directions of the arrows 12 of Figure 1. During these movements, the cartridge 2 will not be brought into contact with the adhesive 7 or 11 even if there is a considerable variation in the size of the cartridge 2.

The above description is directed exclusively to the first supporting plate 6, but the second supporting plate 10 has an absolutely similar structure so that the first and second supporting plates 6 and 10 and the adhesives 7 and 11 are kept from contact with the cartridge 2. As a result, the said head pressing force will not change during the recording and reproducing operations.

By virtue of the foregoing structures, the adhesives 7 and 11 can ensure highly reliable and stable adhesion without any bulge, and the adhesion workability is excellent for the purposes of mass-production because the amounts of the adhesives 7 and 11 to be supplied do not need to be finely controlled.

The construction in which the first supporting plate 6 flexes generally towards the first carriage 4 whereas the second supporting plate 10 flexes generally towards the second carriage 8, can prevent the adhesives 7 and 11 from bulging. Such a construction can be easily arranged to have similar functions by fusing or welding means, for example, even if the construction (not shown) fixes the first and second supporting plates 6 and 10 in position.

A modification of the structure shown in Figure 1 will be described with reference to Figure 2(b) which shows in detail the main portion of a means of fixing a supporting plate to a carriage in one embodiment of the present invention. Portions of the said embodiment other than that shown in Figure 2(b) are absolutely similar to the corresponding portions shown in Figure 1 and 2(a), and exhibit similar functions and effects, which will be omitted here.

As shown in Figure 2(b), a first carriage 34 is mounted for movement by moving means (not shown) and carries a first magnetic head (not shown) by way of a first supporting plate 36. The first carriage 34 has a mounting face 34b on which the first supporting plate 36 is mounted.

The first carriage 34 is formed with a space 34a which is located in a portion of the mounting face 34b and has a desired depth with respect to the first supporting plate 36. A space 34d extends from the space 34a but has a greater depth with respect to the first supporting plate 36 than the space 34a.

Moreover, the first supporting plate 36 is formed with a hole 36a which is positioned to face the space 34a or 34d. As a result, the first supporting plate 36 is fixed on the mounting face 34b by filling up the spaces 34a and 34d with an adhesive 37 through the hole 36a, as shown in Figure 2(b).

With the fixing structure described above, the adhesive 37 will be caused to penetrate sufficiently into the space 34a by capillary action, as in the structure shown in Figures 1 and 2(a). In the other space 34d on the other hand, the adhesive 37 will be drawn by the action of the surface tension, as shown in Figure 2(b), along both the first supporting plate 36 and the wall 34c which extends alongside the space 34d, so that the adhesive 37 is prevented from bulging and forms a meniscus.

Moreover, this construction has adequate strength by virtue of the fact that the adhesive 37 fills up the space 34a. In the portion of the space 34d in which the adhesive 37 forms the meniscus while being prevented from bulging by the surface tension, the adhesive 37 does not positively increase the adhesion strength but provides a space for any excess in the charged amount of the adhesive 37 so as to ensure stable adhesion. Thus, the adhesive 37 itself acts as an adhesive filling buffer means corresponding to that provided in the structure of Figures 1 and 2(a).

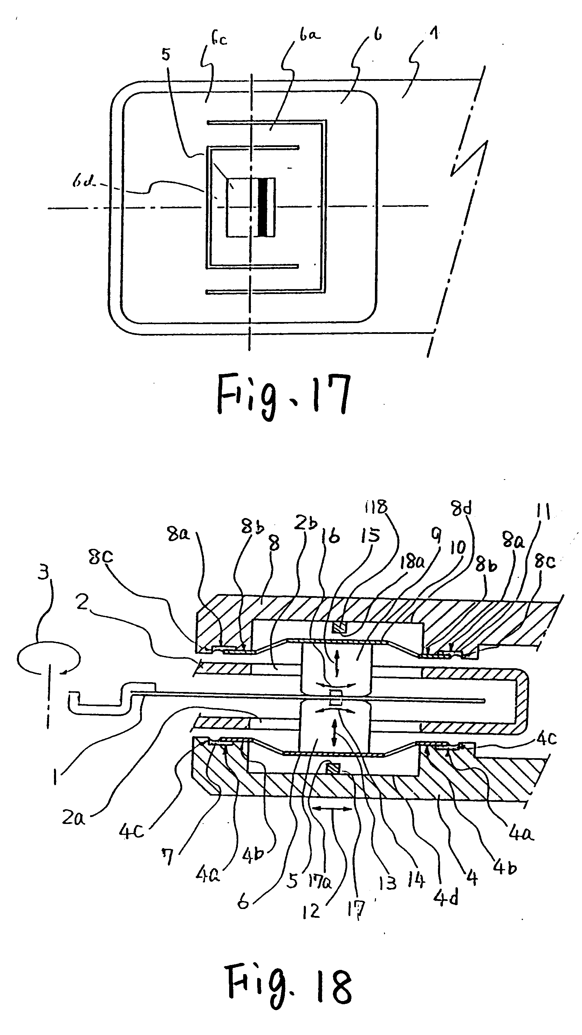

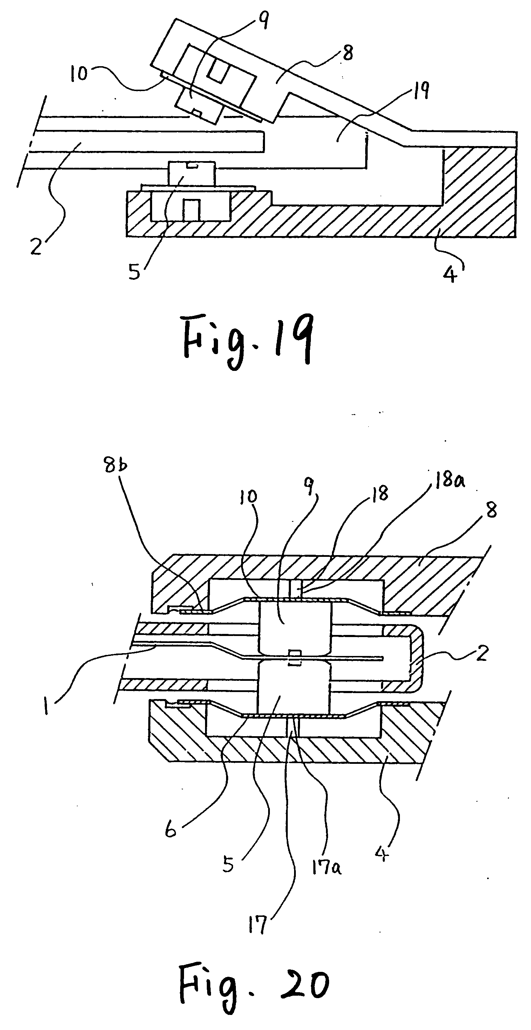

A construction for preventing excessive flexure of the supporting plates 6 and 10 will be described below with reference to Figures 18 and 19, although a detailed description of Figure 18 will be omitted because it is similar to Figure 1 except for generally rectangular cross section or other column-shaped projections 17 and 18.

In the recording or reproducing state shown in Figure 18,the first supporting plate 6 is flexed to a predetermined extent by the head pressing force. The first projection 17 is arranged to project integrally from the carriage 4 from the bottom 4d of the carriage 4 to the first supporting plate 6. The first projection 17 has its leading end 17a positioned at a predetermined slight spacing to face the first supporting plate 6 on which the magnetic head 5 is mounted in the flexed state. Likewise, the second supporting plate 10 is flexed to a predetermined extent by the head pressing force. The second projection 18 is arranged to project integrally from the carriage 8 from the bottom 8d of the carriage 8 to the second supporting plate 10. The second projection 18 has its leading end 18a positioned at a predetermined slight spacing to face the second supporting plate 10 on which the magnetic head 9 is mounted in the said head loaded state.

Figure 19 shows diagrammatically a main portion of the carriage of the present embodiment while the carriage is in the said head-unloaded state before and after the recording and reproducing operations.

In this head-unloaded state, the second carriage 8 is in engagement with a holder 19 which accommodates the recording medium and receives and holds the disk cartridge 2 in the magnetic recording apparatus so as to move it to the recording and reproducing position, and the second carriage 8 is disposed in a position in which there is a spacing at least equal to the thickness of the disk cartridge 2 between the first and second magnetic heads 5 and 9.

As the holder 19 moves to the recording and reproducing position while holding the disk cartridge 2, the second magnetic head 9 comes close to the first magnetic head 5 carried on the first carriage 4 until the second magnetic head 9 is brought to the recording and reproducing position together with the first magnetic head 5 so as to come into close contact with the magnetic medium on the disk 1 by the head pressing force of the second carriage 8.

Figure 20 is a schematic sectional side elevation showing another head supporting mechanism in the state in which the second magnetic head 9 thereof impinges upon the first magnetic head 5 thereof through the magnetic disk, as a result of movement of a cartridge 2 to the recording and reproducing position.

When the second magnetic head 9 impinges upon the first magnetic head 5, the resultant impact is transmitted through the first magnetic head 5 to the first supporting plate 6 so that the first supporting plate 6 flexes towards the first projection 17 to an extent more than that in the aforementioned recording and reproducing operations. When the flexure of the first supporting plate 6 slightly exceeds that in the recording and reproducing state, the first supporting plate 6 comes into abutment with the leading end 17a of the first projection 17 so that its further flexure is prevented.

In some cases, the impact could, in the absence of the first projection 17, be sufficient to elastically deform and break the first supporting plate 6, depending upon the shape of the latter, in the free state in the direction of flexure, so as to make the recording and reproducing operations impossible. By bringingthe first supporting plate 6 into abutment against the first projection 17 to regulate the flexure, however, the impact can be transmitted to the carriage 4 from the first supporting plate 6, and through the first projection 17 so that the first supporting plate 6 can be protected against the impact during the recording and reproducing operations.

Moreover, an impact resulting from impingement can also be transmitted through the second magnetic head 9 to the second supporting plate 10 so that the second supporting plate 10 flexes to a greater extent towards the second projection 18 than it does in the recording and reproducing operations. When the flexure of the second supporting plate 10 slightly exceeds that which occcurs in the recording and reproducing operations, the second supporting plate 10 comes into abutment against the leading end 18a of the second projection 18 so that any further flexure thereof is prevented.

In some cases, the impact could, in the absence of the second projection 18, be sufficient to elastically deform and break the second supporting plate 10, depending upon the shape of the second supporting plate 10, in the free state in the direction of flexure, so as to make the recording and reproducing operations impossible. By bringing the second supporting plate 10 into abutment against the second projection 18 to regulate the flexure, however, the impact can be transmitted to the second carriage 8 from the second supporting plate 10 and through the second projection 18 so that the second supporting plate 10 can be protected against the impact during the recording and reproducing operations.

In the absence of the second projection 18, moreover, the disk cartridge 2 can come into contact with that portion of the second supporting plate 10, which is fixed to the mounting face 8b. As a result, the disk cartridge 2 or the second carriage 8 may in some cases be broken. By bringing the second supporting plate 10 into abutment against the second projection 18 to regulate the flexure, however, the disk cartridge 2 and the second carriage 8 can be protected from the aforementioned impact during the recording and reproducing operations.

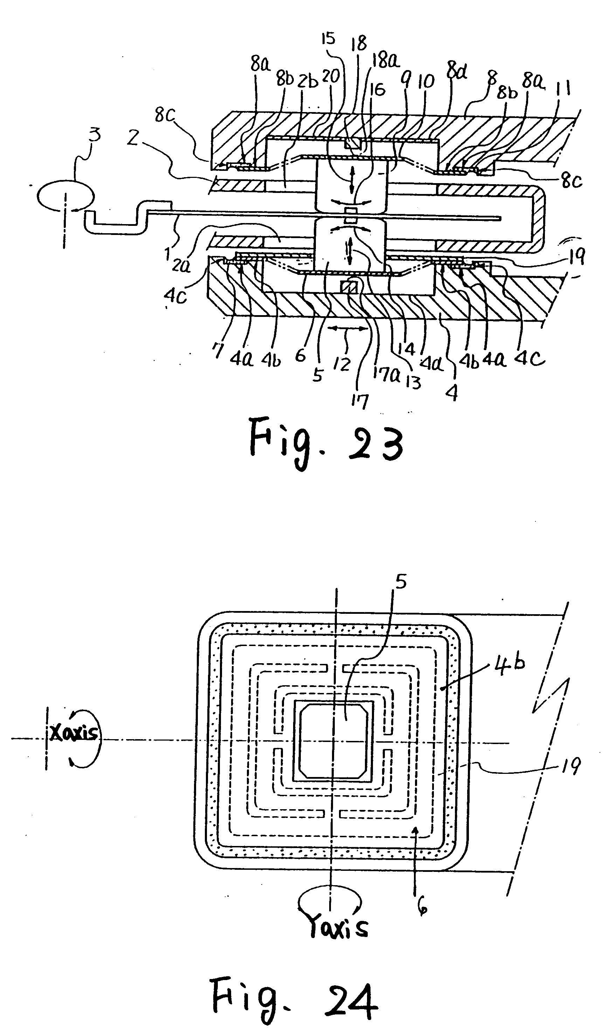

A magnetic head supporting apparatus having increased resistance to an external vibration will be described with reference to Figures 23, 24, 25 and 26.

The construction shown in Figure 23 is similar to those of Figures 1 and 18 except for the provision of a supporting plate protector 19 and a shield plate 20, so that a detailed description of Figure 23 will be omitted.

In the construction of Figure 23, however, the shield plate 20, which is provided to protect the second magnetic head 9 from extraneous noise is fixed on the bottom 8d of the second carriage 8 other than on the portion of the latter provided with the second projection 18.

The supporting plate protector 19 is provided for regulating the vibration of the first supporting plate 6 and is fixed on the first supporting plate 6 at its first magnetic head mounting face. That is to say, when the apparatus is driven and the first supporting plate 6 is thereby vibrated, the supporting plate protector 19 ensures that the vibration of the first supporting plate 6 is regulated, although the supporting plate protector 19 itself is not vibrated sympathetically by the vibration of the first supporting plate 6. Figure 24 is a top plan view showing portions of the first magnetic head 5 and of the supporting plate protector 19. The fixed portions of the supporting plate protector 19 and of the first supporting plate 6 are respectively located at the outer circumference of the first supporting plate 6 where the latter is fixed on the first supporting face 4b and at the first magnetic head mounting face. The supporting plate protector 19 is preferably made of a highly permeable or conductive material.

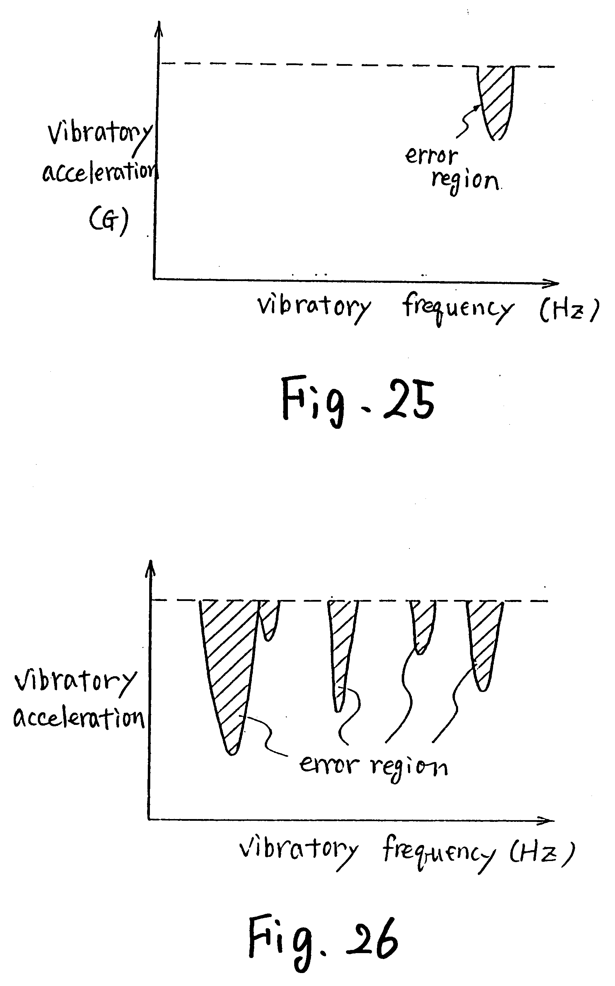

The flexibility of the first supporting plate 6 allows the first magnetic head 5 to move in the directions of the arrows 13 and to roll without any directional restriction, as indicated by the arrows 14. Likewise, the flexibility of the second supporting plate 10 allows the second magnetic head 9 to move in the directions of the arrows 15 and to roll without any directional restriction, as indicated by the arrows 16. As a result, complicated vibrations of various modes can arise from disturbances such as vibrations or impacts so as to cause resonances of various frequencies. This resonance phenomenon will be described with reference to Figure 26. Figure 26 shows error regions in which the recording and reproducing operations are impossible in the case of the prior art shown in Figure 3(b), these error regions being shown in relation to the vibratory frequency (Hz) and the vibratory acceleration (G). From Figure 26, it will be seen that errors occur in various frequency bands.

The following case will now be considered as an example of how the aforementioned errors are caused. Figure 9(b) shows the instant when disturbances cause resonant vibrations as a result of movement from the state of Figure 9(a) only in the directions of the arrows 13 or 15. In this case, too, it is assumed that the first supporting plate 6 is inclined on the imaginary point of inclination P1 which is positioned in a plane substantially flush with the mounting face 4b and existing on an imaginary line joining the mounting face 4b. It is also assumed that the second supporting plate 10 is inclined on the imaginary point of inclination P2 which is positioned in a plane substantially flush with the mounting face 8b and existing on a imaginary line joining the mounting face 8b.

Now, if the aforementioned "off-track" displacement Δx1 is allowable, the distance between a position 49 (at which the aforementioned intrinsic recording and reproducing position and the magnetic medium on the disk 1 intersect) and the point P1 is longer than that shown in Figure 9(a), and the "off-track" displacement Δx3 shown in Figure 9(b) is larger than the "off-track" displacement Δx1 shown in Figure 9(a). As a result, if the data are reproduced in this state, the amplitude of the reproduced signals is reduced to make the reproduction incorrect or impossible.

If the errors are caused by the means thus far described, the first supporting plate 6 cannot move towards the second supporting plate 10 from the imaginary line which is in the plane flush with and joining the mounting face 4b, because the construction in which the supporting plate protector 19 for regulating the floating of the first supporting plate 6 is fixed on the first supporting plate 6 at the first magnetic head mounting face. As seen from Figure 9(b), the distance between the said position 49 of the recording and reproducing medium on the disk 1 and the point P1 does not become longer than that shown in Figure 9(b). As a result, the supporting plate protector 19 for regulating the floating of the first supporting plate 6 is fixed on the first supporting plate 6 at the first magnetic head mounting face. With this construction,therefore, the "off-track" displacement is not increased so as to prevent the reproduction from becoming incorrect or impossible.

This state will be described with reference to Figure 25, Figure 25 shows an error region in which the recording and reproducing operations are impossible in the case of an embodiment of the present invention, as plotted against the vibratory frequency (Hz) and the vibratory acceleration (G). As compared with Figure 26, it can be seen from Figure 25 that the errors in various frequency ranges are considerably reduced. The reliability of the magnetic recording apparatus is thereby substantially improved.

The performances of the magnetic heads are affected by disturbances such as noise arising from extraneous electric and magnetic fields. In the present embodiment, the supporting plate protector 19 is made of a highly permeable or conductive material so as to act as a shield means which is effective to protect the magnetic heads against such disturbances.

If the supporting plate protector 19 is made of a plate-shaped magnetic material such as iron, for example, it is effective to provide protection against disturbances such as magnetic noise. If, on the other hand, the supporting plate protector 19 is made of a plate-shaped conductive material such as copper, it is effective to provide protection against disturbances such as electric noise.

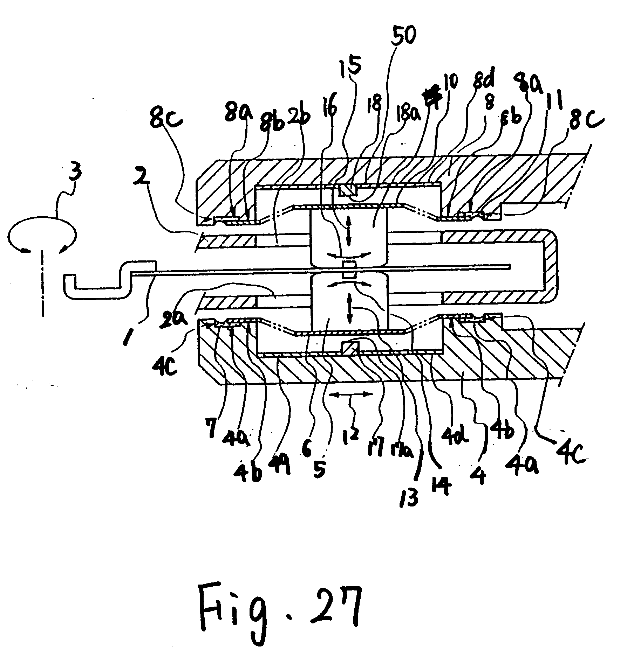

Figure 27 shows a further embodiment of the construction in which shield plates 49, 50 are respectively mounted on the first and second carriages 4, 8. The remaining parts of the Figure 27 construction are similar to those of Figure 18, and further description of them will therefore be omitted.

In the embodiments of the present invention described above, the magnetic heads can move in directions generally perpendicular to the plane of the flexible disk, and the spring rates of the flexible disk in those directions and the torsional rigidities in the radial and tangential directions of the flexible disk are maintained within appropriate ranges. This construction therefore permits the magnetic heads to follow the flexible disk readily so that the positional accuracy of the magnetic heads is greater than in the prior art. The life of the flexible disk is thus increased, and the head supporting apparatus is less likely to be broken. Thus, the present invention can provide a highly reliable magnetic head supporting apparatus having a simple structure which is highly effective for practical applications.

## Claims

1. A magnetic head supporting apparatus comprising a flexible magnetic disk (I); first and second magnetic heads (5, 9) which are adapted to contact opposite sides of the flexible disk (1); first and second supporting plates (6, 10) for respectively supporting the first and second magnetic heads (5, 9), the first and second supporting plates (6, 10) are resiliently yieldable such that the first and second magnetic heads (5, 9) can move directions generally perpendicular to the plane of the flexible disk (1); first and second carriages (4, 8) for respectively carrying the first and second supporting plates (6, 10); and urging means (58c) for urging the first and second magnetic heads (5, 9) towards each other, characterised in that the torsional rigidities of the first and second supporting plates (6, 10) radially and tangentially of the flexible disk (1) are substantially in the range of 400 g mm/rad to 3,000 g mm/rad.

2. Apparatus as claimed in claim 1 characterised in that the supporting plates (6, 10) include flexure arms (6a, 10a) resiliently yieldable supporting the magnetic heads for said perpendicular movement.

3. Apparatus as claimed in claim 1 or 2 characterised in that the first and second supporting plates (6, 10) have substantially equal rigidities.

4. Apparatus as claimed in claim 1, 2 or 3 characterised in that the spring rates of the first and second supporting plates (6, 10) in the said directions are substantially 50 g/mm or more.

5. Apparatus as claimed in any preceding claim characterised in that each supporting plate (6, 10) is fixed to a mounting face (4b, 8b) of its respective carriage (4, 8) by means of adhesive (7, 11) which is disposed in a space (4a, 8a) in the respective carriage (4, 8).

6. Apparatus as claimed in claim 5 characterised in that each mounting face (4b, 8b) is provided with means (4c, 8c) for restricting flow of the adhesive (7, 11) outwardly of the said space (4a, 8a).

7. Apparatus as claimed in any preceding claim characterised in that a stopper means (17, 18) is provided for restricting flexure of at least one of the supporting plates (6,10) in a direction away from the flexible disk (1).

8. Apparatus as claimed in any preceding claim characterised in that at least one supporting plate protector (19) is provided to control floating movement of a supporting plate or plates (6, 10).

9. Apparatus as claimed in claim 8 characterised in that the supporting plate protector (19) is made of highly permeable or a highly conductive material.

## Patentansprüche

1. Magnetkopf-Abstützvorrichtung, aufweisend
eine biegsame Magnetplatte (1);
einen ersten und einen zweiten Magnetkopf (5,9), die zum Berühren gegenüberliegender Seiten der biegsamen Platte (1) ausgelegt sind;
eine erste und eine zweite Abstützplatte (6,10) zum Abstützen des ersten bzw. des zweiten Magnetkopfs (5,9), wobei die erste und die zweite Abstützplatte (6,10) elastisch nachgebend sind, so daß sich der erste und der zweite Magnetkopf (5,9) in Richtungen, die im wesentlichen rechtwinklig zu der Ebene der biegsamen Platte (1) sind, bewegen können;
einen ersten und einen zweiten Schlitten (4,8) zum Tragen der ersten bzw. der zweiten Abstützplatte (6,10); und
Andrückmittel (58c), um den ersten und den zweiten Magnetkopf (5,9) aufeinanderzu zu drücken,
**dadurch gekennzeichnet,**
daß die Torsionssteifigkeiten der ersten und der zweiten Abstützplatte (6,10) radial und tangential zur biegsamen Platte (1) im wesentlichen im Bereich von 400 g mm/rad bis 3 000 g mm/rad liegen.

2. Vorrichtung nach Anspruch 1,
**dadurch gekennzeichnet,**
daß die Abstützplatte (6,10) Biegearme (6a,10a) aufweist, welche die Magnetköpfe für diese rechtwinklige Bewegung elastisch nachgebend abstützen.

3. Vorrichtung nach Anspruch 1 oder 2,
**dadurch gekennzeichnet,**
daß die erste und die zweite Abstützplatte (6,10) im wesentlichen gleiche Steifigkeiten haben.

4. Vorrichtung nach einem der Ansprüche 1 bis 3,
**dadurch gekennzeichnet,**
daß die Federkonstanten der ersten und der zweiten Abstützplatte (6,10) in den genannten Richtungen im wesentlichen 50 g/mm oder größer sind.

5. Vorrichtung nach einem der vorhergehenden Ansprüche,
**dadurch gekennzeichnet,**
daß jede Abstützplatte (6,10) an einer Befestigungsfläche (4b, 8b) ihres jeweiligen Schlittens (4,8) mit Klebstoff (7,11), der in einen Raum (4a, 8a) im jeweiligen Schlitten eingebracht ist, befestigt ist.

6. Vorrichtung nach Anspruch 5,
**dadurch gekennzeichnet,**
daß jede Befestigungsfläche (4b, 8b) mit Mitteln (4c, 8c) versehen ist, um das Fließen des Klebstoffs (7,11) aus dem Zwischenraum (4a, 8a) zu beschränken.

7. Vorrichtung nach einem der vorhergehenden Ansprüche,
**dadurch gekennzeichnet**,
daß Anschlagmittel (17,18) vorgesehen sind, um ein Biegen wenigstens einer der Abstützplatten (6,10) in eine Richtung weg von der biegsamen Platte (1) zu beschränken.

8. Vorrichtung nach einem der vorhergehenden Ansprüche,
**dadurch gekennzeichnet,**
daß mindestens ein Abstützplatten-Protektor (19) vorgesehen ist, um schwimmende Bewegungen einer Abstützplatte oder der Abstützplatten (6,10) zu beschränken.

9. Vorrichtung nach Anspruch 8,
**dadurch gekennzeichnet,**
daß der Abstützplatten-Protektor (19) aus hochpermeablem oder hochleitfähigem Material besteht.

## Revendications

1. Appareil support de tête magnétique comportant un disque magnétique souple (1) ; des première et seconde têtes magnétiques (5, 9) qui sont conçues pour venir en contact avec les faces opposées du disque souple (1) ; des première et seconde plaques supports (6, 10) destinées à supporter respectivement les première et seconde têtes magnétiques (5, 9), les première et seconde plaques supports (6, 10) étant susceptibles d'être courbées de façon élastique afin que les première et seconde têtes magnétiques (5, 9) puissent se déplacer dans des directions généralement perpendiculaires au plan du disque souple (1) ; des premier et second chariots (4, 8) pour supporter les première et seconde plaques supports (6, 10) ; et des moyens de sollicitation (58c) pour solliciter les première et seconde têtes magnétiques (5, 9) l'une vers l'autre, caractérisé en ce que les rigidités en torsion des première et seconde plaques supports (6, 10), radialement et tangentiellement au disque souple (1), sont sensiblement dans la gamme de 400 g mm/rad à 3.000 g mm/rad.

2. Appareil selon la revendication 1, caractérisé en ce que les plaques supports (6, 10) comportent des bras de flexion (6a, 10a) susceptibles de supporter de façon élastiquement flexible les têtes magnétiques lors dudit mouvement perpendiculaire.

3. Appareil selon la revendication 1 ou 2, caractérisé en ce que les première et seconde plaques supports (6, 10) ont sensiblement des rigidités égales.

4. Appareil selon la revendication 1, 2 ou 3, caractérisé en ce que les taux d'élasticité de la première et de la seconde plaques supports (6, 10) dans ladite direction sont sensiblement de 50 g/mm ou plus.

5. Appareil selon l'une quelconque des revendications précédentes, caractérisé en ce que chaque plaque support (6, 10) est fixée à une face de montage (4b, 8b) de son chariot respectif (4, 8) au moyen d'un adhésif (7, 11) qui est disposé dans un espace (4a, 8a) dans le chariot respectif (4, 8).

6. Appareil selon la revendication 5, caractérisé en ce que chaque face du montage (4b, 8b) est munie de moyens (4c, 8c) pour empêcher l'écoulement de l'adhésif (7, 11) vers l'extérieur dudit espace (4a, 8a).

7. Appareil selon l'une quelconque des revendications précédentes, caractérisé en ce qu'un moyen de butée (17, 18) est prévu pour limiter la flexion d'au moins l'une des plaques supports (6, 10) dans une direction éloignée du disque souple (1).

8. Appareil selon l'une quelconque des revendications précédentes, caractérisé en ce qu'au moins un protecteur (19) de plaques supports est prévu pour contrôler le mouvement de flottement d'une plaque ou des plaques supports (6, 10).

9. Appareil selon la revendication 8, caractérisé en ce que le protecteur (19) de plaques supports est réalisé en un matériau hautement perméable et fortement conducteur.
